# EUROPÄISCHE PATENTSCHRIFT

(11) **EP 4 234 658 B1**
(45) Veröffentlichungstag und Bekanntmachung des Hinweises auf die Patenterteilung: **22.01.2025**
(21) Anmeldenummer: 23155049.2
(22) Anmeldetag: 06.02.2023
(51) Int. Cl.: C09K 5/06

(54) **LATENTWÄRMESPEICHERMATERIAL FÜR ULTRAKALTE ANWENDUNGEN UND BEHÄLTER FÜR DEN TEMPERATURGEFÜHRTEN TRANSPORT BEI ULTRAKALTEN TEMPERATUREN**
LATENT HEAT STORAGE MATERIAL FOR ULTRA-COLD APPLICATIONS AND CONTAINER FOR TEMPERATURE-CONTROLLED TRANSPORT AT ULTRA-COLD TEMPERATURES
MATÉRIAU DE STOCKAGE DE CHALEUR LATENTE POUR APPLICATIONS ULTRAFROIDES ET RÉCIPIENT POUR LE TRANSPORT GUIDÉ PAR LA TEMPÉRATURE À DES TEMPÉRATURES ULTRAFROIDES

(30) Priorität: 24.02.2022 DE 102022104371
(43) Veröffentlichungstag der Anmeldung: 30.08.2023
(73) Patentinhaber: va-Q-tec Thermal Solutions GmbH, 97080 Würzburg (DE)
(72) Erfinder: Wollheim, Thomas, 99084 Erfurt (DE); Hoock, Peter, 86159 Augsburg (DE); Hiebler, Stefan, 82467 Garmisch-Partenkirchen (DE); Rathgeber, Christoph, 80686 München (DE); Schmit, Henri, 81549 München (DE); Pöllinger, Simon, 80637 München (DE); Tafelmeier, Stefanie, 84028 Landshut (DE)
(74) Vertreter: Gleim, Christian Ragnar

(56) Entgegenhaltungen:
- GB-A- 2 587 070
- US-A1- 2005 247 906

## Beschreibung

Die Erfindung betrifft ein Latentwärmespeichermaterial für ultrakalte Anwendungen und einen Behälter für den temperaturgeführten Transport bei ultrakalten Temperaturen nach dem jeweiligen unabhängigen Anspruch.

Ultrakalte Anwendungen können insbesondere Ultratiefkälte-Anwendungen in einem Temperaturbereich zwischen -50°C und -85°C, und speziell in einem Temperaturbereich zwischen -60°C und -85°C, umfassen.

Latentwärmespeichermaterialien sind auch unter dem Namen Phasenwechselmaterialien (PCM; engl. Phase Change Material) bekannt. Sie bezeichnen ein Material, welches für eine wärme-/kältetechnische Anwendung einen Wechsel des Aggregatzustands, meist zwischen fest und flüssig, in einem definierten Temperaturbereich nutzt. Dabei wird die Materialzusammensetzung des Latentwärmespeichermaterials auf einen gewünschten Temperaturbereich hin ausgelegt.

Der Phasenwechsel ist reversibel nutzbar, d.h. der Schmelz- und Kristallisationsübergang (Wechsel zwischen dem flüssigen und festen Aggregatszustand) kann wiederholt durchlaufen werden, und dabei von dem Latentwärmespeichermaterial aufgenommene oder abgegebene Enthalpie für wärme-/kältetechnische Anwendung genutzt werden. Mit einem Durchlaufen eines Phasenwechsels stellen Latentwärmespeichermaterialien eine hohe thermische Energiespeicherfähigkeit in einem schmalen Temperaturbereich um ihre Phasenwechseltemperatur bereit.

Latentwärmespeichermaterialien werden oft dafür eingesetzt, Stoffe bei konstanter Temperatur zu lagern und/oder zu transportieren. Beispiele hierfür sind der Transport von Arzneimitteln, wie Impfstoffen, oder Lebensmitteln, welche temperaturempfindlich sind. Im Besonderen benötigen viele pharmazeutische und medizinische Produkte eine Lagertemperatur bei besonders tiefen Temperaturen. Ein Beispiel dafür sind mRNA-Impfstoffe gegen COVID-19, die in einem Bereich von etwa -80 °C bis -60 °C, was einem Ultratieftemperatur-Bereich entspricht, gelagert werden müssen, um eine Degradation bis zu dem Zeitpunkt ihres Einsatzes zu verhindern. Ein weiteres Beispiel ist der Transport von Gewebe- und Blutproben, oder Blutplasma und Blutplasma-Derivaten. Ein zuverlässiges Lagern bei derartig tiefen Temperaturen für einen globalen Transport solcher Transportgüter stellt eine der größten Hürden für entsprechende Logistikprozesse dar.

Hier stellen Latentwärmespeichermaterialien für Latentwärmespeicherelemente, beispielsweise in Verpackungssystemen integriert, um die temperaturempfindlichen Materialien während des Transports in einem gewünschten Temperaturbereich zu halten, eine technisch, ökonomisch und ökologisch vorteilhafte Lösung im Vergleich zu anderen Kühlmitteln, wie beispielsweise Trockeneis (Phasenwechsel bei -78,5 °C) dar.

Aus dem Stand der Technik sind beispielsweise Latentwärmespeichermaterialien bekannt, welche Polymere, wie beispielsweise verschiedene n-Alkane, umfassen. Beispielsweise offenbart die US 9 556 373 B2 ein Gel mit einem PCM, welches z.B. n-Tetradecan, n-Hexadecan oder n-Octadecan umfasst. Es wird ebenfalls offenbart, dass durch die relativen Anteile verschiedener n-Alkane in einer Mischung die Phasenwechseltemperatur eingestellt werden kann. Ein derartiges Latentwärmespeichermaterial ist jedoch nicht für den Einsatz bei ultratiefen Temperaturen, insbesondere für Ultratiefkälte-Anwendungen in einem Temperaturbereich zwischen -50°C und -85°C, geeignet.

Generell zeigen Latentwärmespeichermaterialien für ultrakalte Anwendungen (aber auch für Anwendungen in anderen Temperaturbereichen) häufig eine starke Unterkühlung. Dabei kann der Einsatz eines Keimbildners das Unterkühlen verhindern oder zumindest reduzieren. Es kann jedoch schwierig sein einen geeigneten Keimbildner zu finden. Das Unterkühlen bedeutet, dass das Latentwärmespeichermaterial im flüssigen Aggregatszustand weit unter seine Schmelztemperatur abgekühlt werden kann, ohne dass das Material in einen festen Aggregatszustand durch Kristallisation übergeht. Somit wird auch nicht die mit einem Phasenübergang verbundene Enthalpie abgegeben und die Kältespeicherdichte verringert sich signifikant. Oft ist es nicht, oder nur schwierig möglich für derartige Materialien die nötigen tiefen Nukleationstemperaturen mit gängigen Kältemaschinen zu erreichen. Selbst wenn diese erreicht werden könnten, wäre der nötige energetische Mehraufwand zum Unterschreiten dieser Nukleationstemperaturen technisch, ökonomisch und ökologisch nachteilig.

Latentwärmespeichermaterialien auf Basis von Wasser und Salzen sind bekannt aus US2005247906 und GB2587070.

Es ist die Aufgabe der vorliegenden Erfindung ein Latentwärmespeichermaterial für ultrakalte Anwendungen bereitzustellen, welches die Nachteile aus dem Stand der Technik überwindet und insbesondere besonders nahe beieinanderliegende Schmelz- und Kristallisationstemperaturen durch das Aufweisen eines vorteilhaften Keimbildners aufweist, und weiterhin einen Behälter für den temperaturgeführten Transport bei ultrakalten Temperaturen bereitzustellen.

Die Erfindung umfasst ein Latentwärmespeichermaterial für ultrakalte Anwendungen umfassend zumindest ein Lithiumsalz, zumindest ein Lösungsmittel und zumindest einen Keimbildner, wobei der zumindest eine Keimbildner ausgewählt ist aus einem oder einer Kombination der Stoffe Natriumcarbonat, Lithiumcarbonat, Kaliumcarbonat, Bariumfluorid, Natriumnitrat, und/oder Lithiumhydroxid.

Der Einsatz dieser Keimbildner ermöglicht es, dass das Latentwärmespeichermaterial eine Kristallisationstemperatur aufweist, welche nahe an der Schmelztemperatur liegt. Dabei kann der zumindest eine Keimbildner einen oder mehrere der oben genannten Stoffe einzeln oder in einer Mischung umfassen. Dabei hat sich in Verbindung mit Lithiumbromid als Lithiumsalz und Wasser als Lösungsmittel besonders Natriumcarbonat und Lithiumcarbonat als vorteilhaft für die Kristallisation und Ultratiefkälte-Anwendungen in einem Temperaturbereich zwischen -50°C ≥ T ≥ -85°C erwiesen. Weiterhin umfasst das Latentwärmespeichermaterial den Keimbildner ausgewählt aus den oben genannten Stoffen entweder durch direkte Zugabe in Form des Salzes des Stoffes, oder durch Reaktion (beispielsweise aus Fällung) aus den entsprechenden Ionen die in dem Latentwärmespeichermaterial in einer flüssigen Phase gelöst (durch Zugabe anderer Salze) vorhanden sind.

Nach einem bevorzugten Aspekt umfasst das zumindest eine Lithiumsalz Lithiumbromid und/oder Lithiumchlorid.

Nach einem bevorzugten Aspekt umfasst das zumindest eine Lösungsmittel Wasser.

Der Einsatz von Lithiumbromid und Wasser ermöglicht es ein Latentwärmespeichermaterial bereitzustellen, welches eine Schmelztemperatur Ts in einem Bereich zwischen -75°C und -60°C aufweist.

Nach einem vorteilhaften Aspekt umfasst das Latentwärmespeichermaterial das zumindest eine Lithiumsalz in einem Bereich zwischen 20 Gew.-% bis 45 Gew.-%.

Diese Zusammensetzungen haben sich als besonders vorteilhaft für Ultratiefkälte-Anwendungen in einem Temperaturbereich zwischen -50°C ≥ T ≥ -85°C erwiesen.

Nach einem besonders vorteilhaften Aspekt ist der Anteil und/oder die Zusammensetzung des zumindest einen Lithiumsalz und der Anteil und/oder die Zusammensetzung des zumindest einen Lösungsmittels derart ausgewählt, sodass die Schmelztemperatur Ts des Latentwärmespeichermaterials in einem Bereich zwischen -60°C ≥ Ts ≥ -85°C, insbesondere in einem Bereich -60°C ≥ Ts ≥ -75°C, ist.

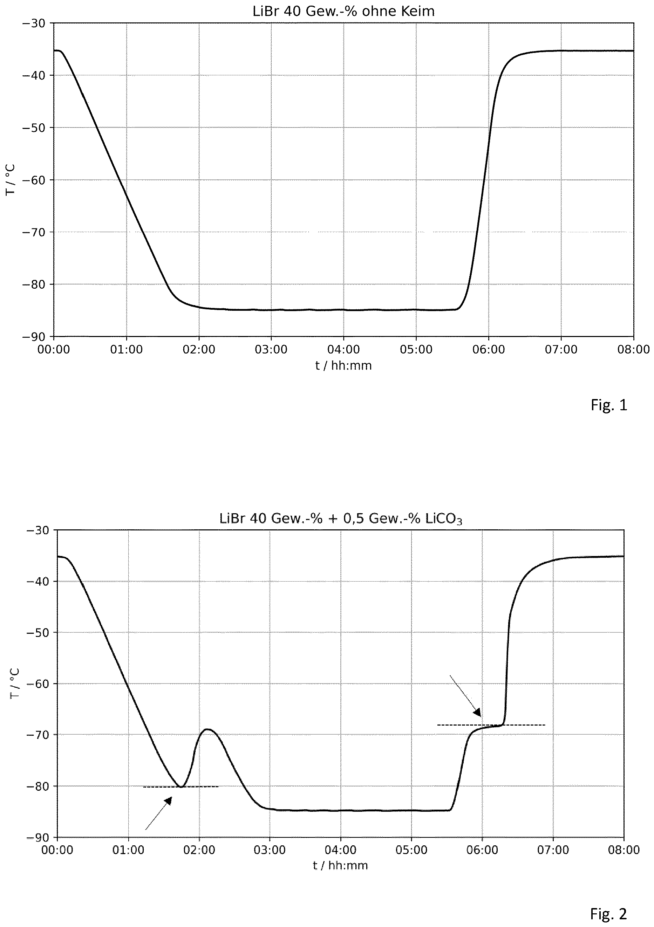

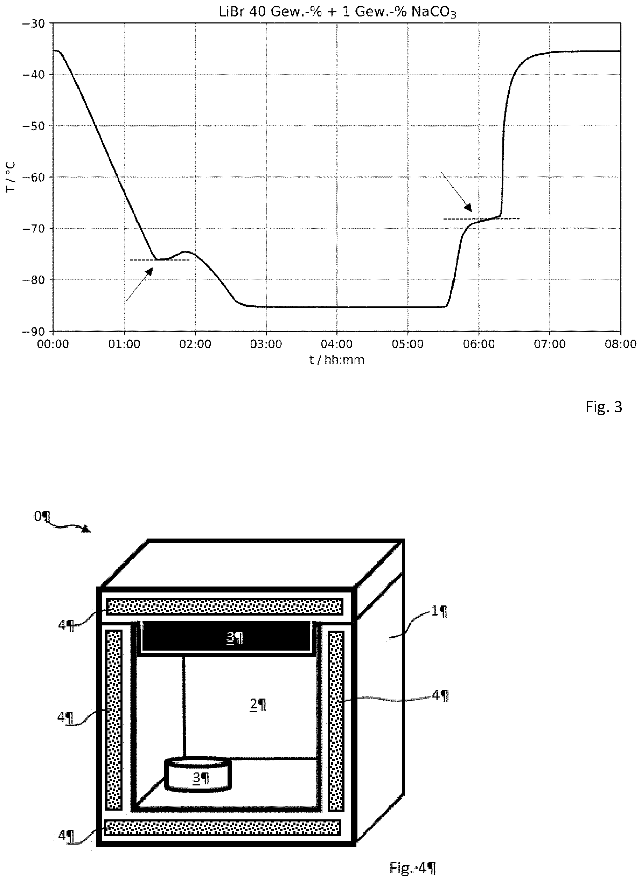

Beispielhafte Ausführungsformen sind im Zusammenhang mit den Figuren Fig. 2 und Fig. 3 beschrieben.

Nach einem bevorzugten Aspekt ist der Anteil und/oder die Zusammensetzung des Keimbildners derart ausgewählt, sodass für die Kristallisationstemperatur T_{K} des Latentwärmespeichermaterials und die Schmelztemperatur Ts des Latentwärmespeichermaterials gilt: 0 K ≥ T_{K}- Ts ≥ -15 K, insbesondere 0 K ≥ T_{K}- Ts ≥ -10 K.

Damit tritt keine starke Unterkühlung des Latentwärmespeichermaterials auf, sodass das Latentwärmespeichermaterial ökonomisch und ökologisch vorteilhaft genutzt werden kann.

Nach einem weiteren vorteilhaften Aspekt umfasst das Latentwärmespeichermaterial den zumindest einen Keimbildner in einem Bereich zwischen 0,01 Gew.-% bis 30 Gew.-% und insbesondere in einem Bereich zwischen 0,5 Gew.-% bis 5 Gew.-%.

Diese Konzentration an Keimbildner gewährleistet, dass beim Herunterkühlen des Latentwärmespeichermaterials dieses nicht zu stark unterkühlt, ohne dass ein Kristallisationsprozess einsetzt. Dabei hat sich besonders Natriumcarbonat und/oder Lithiumcarbonat mit einem Anteil in einem Bereich zwischen 0,5 Gew.-% und 1,0 Gew.-% als vorteilhaft erwiesen.

Die Erfindung umfasst weiterhin einen Behälter für den temperaturgeführten Transport bei ultrakalten Temperaturen, umfassend eine Behälterwandung, welche einen Innenraum vollständig umschließt, und zumindest ein Latentwärmespeicherelement, umfassend ein Latentwärmespeichermaterial wie oben beschrieben, wobei das zumindest eine Latentwärmespeicherelement innerhalb des Innenraums und/oder in der Behälterwandung angeordnet ist.

Dadurch, dass der Behälter zumindest ein Latentwärmespeicherelement, umfassend ein Latentwärmespeichermaterial wie oben beschrieben, umfasst, ist der Behälter für Ultratiefkälte-Anwendungen, beispielsweise den temperaturgeführten Transport, in einem Temperaturbereich zwischen -50°C ≥ T ≥ -85°C, insbesondere in einem Temperaturbereich zwischen -60°C ≥ T ≥ -85°C geeignet. Insbesondere kann dadurch die Luft in dem Innenraum über den Zeitraum des Transports hinweg in einem Temperaturbereich zwischen -50°C ≥ T ≥ -85°C, insbesondere in einem Temperaturbereich zwischen -60°C ≥ T ≥ -85°C, gehalten werden.

Ein solcher Behälter ist technisch, ökonomisch und ökologisch vorteilhaft, insbesondere im Vergleich zu anderen Behältern, welche Trockeneis für Ultratiefkälte-Anwendungen nutzen.

Nach einem vorteilhaften Aspekt umfasst der Behälter zumindest ein Vakuumisolationselement, welches in der Behälterwandung angeordnet ist.

Durch die Anordnung von zumindest einem Vakuumisolationselement in der Behälterwandung wird die Dämmung des Behälters stark erhöht und der Zeitraum für den Transport bei ultratiefen Temperaturen wird verlängert.

Im Folgenden wird die Erfindung anhand von Ausführungsbeispielen näher erläutert.

Dabei zeigen:
- Fig. 1: Zeitlicher Verlauf der Abkühlung und Erwärmung eines nicht erfindungsgemäßen Ausführungsbeispiels eines Latentwärmespeichermaterials;
- Fig. 2: Zeitlicher Verlauf der Abkühlung und Erwärmung eines ersten erfindungsgemäßen Ausführungsbeispiels eines Latentwärmespeichermaterials;
- Fig. 3: Zeitlicher Verlauf der Abkühlung und Erwärmung eines zweiten erfindungsgemäßen Ausführungsbeispiels eines Latentwärmespeichermaterials; und
- Fig. 4: Querschnitt durch einen Behälter für den temperaturgeführten Transport bei ultrakalten Temperaturen.

Zunächst wird der Prozess der Abkühlung und Erwärmung eines nicht erfindungsgemäßen Ausführungsbeispiels eines Latentwärmespeichermaterials anhand von Fig. 1 näher erläutert. Dabei umfasst das nicht erfindungsgemäße Ausführungsbeispiels des Latentwärmespeichermaterials Lithiumbromid zu 45 Gew.-% und Wasser zu 60 Gew.-%. Zudem umfasst das Latentwärmespeichermaterial keinen Keimbildner.

Der zeitliche Verlauf zeigt, dass sich während der Abkühlung und der Erwärmung dieses Latentwärmespeichermaterials kein Kristallisationsplateau und kein Schmelzplateau ausbilden. Bei diesem Latentwärmespeichermaterial wird keine Kristallisation bis zu einer Abkühlung auf eine Temperatur von -85°C über mehrere Stunden beobachtet. Dies deutet auf eine Unterkühlung des Latentwärmespeichermaterials bis unter -85°C hin. Dies zeigt die Untauglichkeit dieses nicht-erfindungsgemäßen Latentwärmespeichermaterial, insbesondere für die Latentwärmespeicheranwendung in einem Ultratiefkälte-Temperaturbereich zwischen -50°C ≥ T ≥ -85°C.

Entsprechendes gilt für ein Latentwärmespeichermaterial, welches einen ungeeigneten Keimbildner und/oder einen Keimbildner in ungeeigneter Konzentration umfasst.

Fig. 2 zeigt einen zeitlichen Verlauf der Abkühlung und Erwärmung eines ersten erfindungsgemäßen Ausführungsbeispiels eines Latentwärmespeichermaterials.

Dabei umfasst das Latentwärmespeichermaterial Lithiumbromid zu 45 Gew.-% und Wasser zu 60 Gew.-%. Zudem umfasst das Latentwärmespeichermaterial Lithiumcarbonat als Keimbildner zu 0,5 Gew.-%.

Der zeitliche Verlauf zeigt, dass sich während der Abkühlung eine Kristallisation bei etwa -80°C ausbildet, und dass sich bei der Erwärmung ein Schmelzplateau bei etwa -68°C ausbildet. Dieses Latentwärmespeichermaterial besitzt somit nahe beieinander liegende Kristallisations- (T_{K}) und Schmelztemperaturen (Ts).

Das angegebene Latentwärmespeichermaterial ist demnach geeignet, die Kälte-/Wärmeenergie für Anwendungen in einem Ultratiefkälte-Temperaturbereich zwischen -50°C ≥ T ≥ -85°C, insbesondere zwischen -60°C ≥ T ≥ -85°C, latent zu speichern.

Fig. 3 zeigt einen zeitlichen Verlauf der Abkühlung und Erwärmung eines zweiten erfindungsgemäßen Ausführungsbeispiels eines Latentwärmespeichermaterials.

Dabei umfasst das Latentwärmespeichermaterial Lithiumbromid zu 40 Gew.-% und Wasser zu 60 Gew.-%. Zudem umfasst das Latentwärmespeichermaterial Natriumcarbonat als Keimbildner zu 1,0 Gew.-%.

Der zeitliche Verlauf zeigt, dass sich während der Abkühlung eine Kristallisation bei etwa -76°C ausbildet, und dass sich bei der Erwärmung ein Schmelzplateau bei etwa -68°C ausbildet. Dieses Latentwärmespeichermaterial besitzt somit nahe beieinander liegende Kristallisations- und Schmelztemperaturen.

Das angegebene Latentwärmespeichermaterial ist demnach geeignet, die Kälte-/Wärmeenergie in einem Ultratiefkälte-Temperaturbereich zwischen -50°C ≥ T ≥ -85°C, insbesondere zwischen -60°C ≥ T ≥ -85°C, latent zu speichern.

**Fig. 4** zeigt einen Querschnitt durch einen Behälter 0 für den temperaturgeführten Transport bei ultrakalten Temperaturen.

Dieser umfasst eine Behälterwandung 1 mit Seitenwänden und Deckel. Die Behälterwandung 1 umschließt den Innenraum 2 vollständig. Innerhalb der Behälterwandung 1 (Seitenwände und Deckel) sind je ein Vakuumisolationselement 4 angeordnet. Hierdurch wird eine optimale Dämmung des Behälters erreicht, wodurch der Zeitraum für den Transport bei ultratiefen Temperaturen gegenüber Behältern ohne Vakuumisolationselemente 4 verlängert wird.

Innerhalb des Innenraums 2 und in dem Deckel-Teil der Behälterwandung 1 sind je ein Latentwärmespeicherelement 3 angeordnet. Die Latentwärmespeicherelemente 3 umfassen dabei ein Latentwärmespeichermaterial wie oben beschrieben, geeignet zur latenten Speicherung von Kälte-/Wärmeenergie in einem Ultratiefkälte-Temperaturbereich zwischen -50°C ≥ T ≥ -85°C.

Damit ist auch der Behälter 0 für Ultratiefkälte-Anwendungen, beispielsweise den temperaturgeführten Transport, in einem Temperaturbereich zwischen -50°C ≥ T ≥ - 85°C geeignet, da die Luft in dem Innenraum 2 über den Zeitraum des Transports hinweg in einem Temperaturbereich zwischen -50°C ≥ T ≥ -85°C gehalten wird.

Ein solcher Behälter 0 ist technisch, ökonomisch und ökologisch vorteilhaft, insbesondere im Vergleich zu anderen Behältern, welche Trockeneis für Ultratiefkälte-Anwendungen nutzen, da die Latentwärmespeichermaterialien in Form von Latentwärmespeicherelementen 3 leicht transportierbar und wiederverwendbar sind.

## Patentansprüche

1. Latentwärmespeichermaterial für ultrakalte Anwendungen umfassend zumindest ein Lithiumsalz, zumindest ein Lösungsmittel und zumindest einen Keimbildner, wobei der zumindest eine Keimbildner ausgewählt ist aus einem oder einer Kombination von Natriumcarbonat, Lithiumcarbonat, Kaliumcarbonat, Bariumfluorid, Natriumnitrat, und/oder Lithiumhydroxid.

2. Latentwärmespeichermaterial nach Anspruch 1, wobei das zumindest eine Lithiumsalz Lithiumbromid und/oder Lithiumchlorid umfasst.

3. Latentwärmespeichermaterial nach Anspruch 1 oder 2, wobei das zumindest eine Lösungsmittel Wasser umfasst.

4. Latentwärmespeichermaterial nach einem der vorangehenden Ansprüche, umfassend das zumindest eine Lithiumsalz in einem Bereich zwischen 20 Gew.-% bis 45 Gew.-%.

5. Latentwärmespeichermaterial nach einem der vorangehenden Ansprüche, wobei der Anteil und/oder die Zusammensetzung des zumindest einen Lithiumsalz und der Anteil und/oder die Zusammensetzung des zumindest einen Lösungsmittels derart ausgewählt ist, sodass die Schmelztemperatur Ts des Latentwärmespeichermaterials in einem Bereich zwischen -60°C ≥ Ts ≥ -85°C, insbesondere in einem Bereich -60°C ≥ Ts ≥ -75°, ist.

6. Latentwärmespeichermaterial nach Anspruch 5, wobei der Anteil und/oder die Zusammensetzung des zumindest einen Keimbildners derart ausgewählt ist, sodass für die Kristallisationstemperatur T_{K} des Latentwärmespeichermaterials und die Schmelztemperatur Ts des Latentwärmespeichermaterials gilt: 0 K ≥ T_{K}- T_{S} ≥ -15 K, insbesondere 0 K ≥ T_{K}- Ts ≥ -10 K.

7. Latentwärmespeichermaterial nach Anspruch 6, umfassend den zumindest einen Keimbildner in einem Bereich zwischen 0,01 Gew.-% bis 30 Gew.-%, insbesondere in einem Bereich zwischen 0,5 Gew.-% bis 5 Gew.-%.

8. Behälter (0) für den temperaturgeführten Transport bei ultrakalten Temperaturen, umfassend eine Behälterwandung (1), welche einen Innenraum (2) vollständig umschließt, und zumindest ein Latentwärmespeicherelement (3), umfassend ein Latentwärmespeichermaterial nach einem der vorangehenden Ansprüche, wobei das zumindest eine Latentwärmespeicherelement (3) innerhalb des Innenraums und/oder in der Behälterwandung angeordnet ist.

9. Behälter (0) nach Anspruch 8, umfassend zumindest ein Vakuumisolationselement (4), welches in der Behälterwandung (1) angeordnet ist.

## Claims

1. Latent heat storage material for ultra-cold applications, comprising at least one lithium salt, at least one solvent and at least one nucleating agent, wherein the at least one nucleating agent is selected from one or a combination of sodium carbonate, lithium carbonate, potassium carbonate, barium fluoride, sodium nitrate, and/or lithium hydroxide.

2. Latent heat storage material according to claim 1, wherein said at least one lithium salt comprises lithium bromide and/or lithium chloride.

3. Latent heat storage material according to claims 1 or 2, wherein said at least one solvent comprises water.

4. Latent heat storage material according to any one of the preceding claims, comprising the at least one lithium salt in a range between 20 wt.% to 45 wt.%.

5. Latent heat storage material according to any one of the preceding claims, wherein the proportion and/or the composition of the at least one lithium salt and the proportion and/or the composition of the at least one solvent is/are selected such that the melting temperature Ts of the latent heat storage material is in a range between -60°C ≥ Ts ≥ 85°C, in particular in a range of -60°C ≥ Ts ≥ 75°.

6. Latent heat storage material according to claim 5, wherein the proportion and/or the composition of the at least one nucleating agent is selected such that the following holds true for the crystallization temperature T_{K} of the latent heat storage material and the melting temperature Ts of the latent heat storage material: 0 K ≥ T_{K} - Ts ≥ -15 K, in particular 0 K ≥ T_{K} - Ts ≥ - 10 K.

7. Latent heat storage material according to claim 6, comprising the at least one nucleating agent in a range between 0.01 wt.% to 30 wt.%, in particular in a range between 0.5 wt.% to 5 wt.%.

8. Container (0) for temperature-controlled transport at ultra-cold temperatures, comprising a container wall (1) which completely encloses an interior space (2) and at least one latent heat storage element (3), comprising a latent heat storage material according to one of the preceding claims, wherein the at least one latent heat storage element (3) is arranged within the interior space and/or in the container wall.

9. Container (0) according to claim 8, comprising at least one vacuum insulation element (4) arranged in the container wall (1).

## Revendications

1. Matériau de stockage de la chaleur latente pour les applications ultra-froides, comprenant au moins un sel de lithium, au moins un solvant et au moins un agent nucléant, dans lequel ledit au moins un agent nucléant est choisi parmi un ou une combinaison de carbonate de sodium, carbonate de lithium, carbonate de potassium, fluorure de baryum, nitrate de sodium et/ou hydroxyde de lithium.

2. Matériau de stockage de la chaleur latente selon la revendication 1, dans lequel ledit au moins un sel de lithium comprend du bromure de lithium et/ou du chlorure de lithium.

3. Matériau de stockage de la chaleur latente selon la revendication 1 ou 2, dans lequel ledit au moins un solvant comprend de l'eau.

4. Matériau de stockage de la chaleur latente selon l'une quelconque des revendications précédentes, comprenant au moins un sel de lithium dans une plage comprise entre 20 % en poids à 45 % en poids.

5. Matériau de stockage de la chaleur latente selon l'une quelconque des revendications précédentes, dans lequel la proportion et/ou la composition du au moins un sel de lithium et la proportion et/ou la composition du au moins un solvant est/sont choisie(s) de telle sorte que la température de fusion Ts du matériau de stockage de la chaleur latente se situe dans une plage comprise entre -60°C ≥ T_{S} ≥ 85°C, en particulier dans une plage de -60°C ≥ T_{S} ≥ 75°.

6. Matériau de stockage de la chaleur latente selon la revendication 5, dans lequel la proportion et/ou la composition de ledit au moins un agent nucléant est choisie de telle sorte que ce qui suit est vrai pour la température de cristallisation T_{K} du matériau de stockage de la chaleur latente et la température de fusion Ts du matériau de stockage de la chaleur latente : 0 K ≥ T_{K} -Ts ≥ -15 K, en particulier 0 K ≥ T_{K} -Ts ≥ -10 K.

7. Matériau de stockage de la chaleur latente selon la revendication 6, comprenant ledit au moins un agent nucléant dans une plage comprise entre 0,01 % en poids à 30 % en poids, en particulier dans une plage comprise entre 0,5 % en poids à 5 % en poids.

8. Récipient (0) pour le transport à température contrôlée à des températures ultra-froides, comprenant une paroi du récipient (1) qui entoure complètement un espace intérieur (2) et au moins un élément de stockage de la chaleur latente (3), comprenant un matériau de stockage de la chaleur latente selon l'une quelconque des revendications précédentes, dans lequel ledit au moins un élément de stockage de la chaleur latente (3) est disposé dans l'espace intérieur et/ou dans la paroi du récipient.

9. Récipient (0) selon la revendication 8, comprenant au moins un élément d'isolation sous vide (4) disposé dans la paroi du récipient (1).
